# EUROPÄISCHE PATENTSCHRIFT

(11) **EP 0 855 965 B1**
(45) Veröffentlichungstag und Bekanntmachung des Hinweises auf die Patenterteilung: **15.09.1999**
(21) Anmeldenummer: 96934536.2
(22) Anmeldetag: 04.10.1996
(51) Int. Cl.: B60J 5/00, B62D 25/12, B23K 33/00

(54) **KFZ-TÜR ODER KFZ-KLAPPE**
MOTOR VEHICLE DOOR OR HATCH
PORTIERE OU HAYON DE VEHICULE

(30) Priorität: 17.10.1995 DE 19538595
(43) Veröffentlichungstag der Anmeldung: 05.08.1998
(73) Patentinhaber: THYSSEN INDUSTRIE AG, 45128 Essen (DE)
(72) Erfinder: ZIMMER, Erich, D-66687 Wadern (DE)
(74) Vertreter: Dahlkamp, Heinrich-Leo, Dipl.-Ing.
(86) Internationale Anmeldenummer: EP9604319
(87) Internationale Veröffentlichungsnummer: WO9714569

(56) Entgegenhaltungen:
- EP-A- 0 200 997
- EP-A- 0 281 024
- EP-A- 0 305 920
- EP-A- 0 383 040
- EP-A- 0 511 746
- DE-A- 4 341 255
- US-A- 4 916 284

## Beschreibung

Die Erfindung betrifft eine Kfz-Tür oder eine Kfz-Klappe mit einem Außenblech und einem Innenblech, die im Randbereich aneinander abgestützt und miteinander verbunden sind und ein Verfahren zum Herstellen einer Kfz-Tür oder eine Kfz-Klappe. Kfz-Türen oder Kfz-Klappen sollen nicht nur hinreichende Festigkeit besitzen, der zwischen dem Außenblech und dem Innenblech gebildete Innenraum soll auch gegen Feuchtigkeit abgedichtet sein. Dazu wird in der Praxis so vorgegangen, daß das Außenblech mit einem oder mehreren Bördelwerkzeugen so um das Innenblech herumgebogen wird, daß der Rand des Innenblechs vom Außenblech eingefaßt wird. Um eine ausreichende Festigkeit zu erzielen, wird in die Bördelung ein Kleber eingebracht. Um die Bördelstelle vor Feuchtigkeit abzudichten, wird über die Nahtstelle im Bereich des freien Randes des Außenblechs ein Versiegelungskleber aufgetragen. Beide Kleber müssen beim eingespannten Rand der Kfz-Tür oder der Kfz-Klappe erwärmt werden, damit ausreichende Festigkeit und Dichtigkeit erzielt wird.

Daneben ist es bekannt, die Ränder von einander überlappenden Blechen durch Laserstrahlschweißen zu verbinden. Dabei wird ein Laserstrahl derart in den zwischen den beiden Blechen gebildeten Spalt gerichtet, daß er mehrfach reflektiert wird und das Material der beiden Bleche im Bereich des Spaltes schmilzt (auf EP 0511 746). Gegebenenfalls kann dabei auch ein Zusatzwerkstoff in den Spalt eingebracht werden (DE 4341255).

Aufgabe der Erfindung ist es, eine Kfz-Tür oder Kfz-Klappe der eingangs beschriebenen Gattung wie z.B. aus US-A-4 916 284 bekannt anzugeben, die einfacher herstellbar ist und dennoch hinreichende Festigkeit und Dichtigkeit besitzt.

Diese Aufgabe wird dadurch gelöst, daß ein Randstreifen des Innenblechs in Richtung Türinnenseite wulstbildend abgebogen ist und mit einem ebenfalls in Richtung Türinnenseite abgebogenen Randstreifen des Außenblechs mittels einer den Spalt zwischen den beiden Randstreifen füllenden Laserschweißnaht verbunden ist. Die Randstreifen, die unter einem Winkel < 90° oder gleich 90° oder auch > 90° zur Blechebene bzw. zur Türebene abgebogen sein können, vergrößern das Widerstandsmoment erheblich. Ein dadurch gebildeter Wulst kann für eine Dichtung eingesetzt werden. Der Verbund der beiden Randstreifen durch eine Laserschweißnaht erfüllt alle Forderungen nach hinreichender Festigkeit und auch Dichtigkeit, so daß besondere Maßnahmen zur Abdichtung, insbesondere das Auftragen von Versiegelungensklebern, entfallen können. Eine Laserschweißverbindung ermöglicht auch den Einsatz von Blechen geringerer Dicke, so daß Material gespart werden kann.

Bei einer bevorzugten Ausführung der Erfindung weist der Randstreifen des Innenblechs einen vom Verbindungsbereich ausgehenden Haltewulst für eine Dichtung auf. Dazu kann der Haltestreifen aus der Ebene des Verbindungsbereiches zurück- und bis in eine Richtung orthogonal zur Türebene gebogen sein.
Bei einer anderen Ausführung der Erfindung ist der Randstreifen des Innenblechs U-profilförmig ausgebildet und bildet mit einem zugeordneten Abschnitt des Außenblechs ein Hohlprofil als Haltewulst für eine Dichtung. Dabei empfiehlt sich eine Anordnung, bei der die Innenseiten der Randstreifen von Außenblech und Innenblech miteinander verbunden sind.

Ein Verfahren zum Herstellen einer Kfz-Tür oder einer Kfz-Klappe, ist dadurch gekennzeichnet, daß vom Außenblech und vom Innenblech jeweils ein Randstreifen abgebogen wird, daß die Bleche aufeinandergelegt und im Stützbereich zwischen einer Auflage und einem Niederhalter eingespannt werden, daß der Randstreifen des Außenblechs mit einem Klemmschieber gegen den Randstreifen des Innenblechs gedrückt wird und daß die Randstreifen mit einem in den Spalt zwischen den beiden Randstreifen gerichteten Laserstrahl verschweißt werden.

Die mit der Erfindung erreichten Vorteile werden zusammengefaßt darin gesehen, daß die Verbindung von Außenblech und Innenblech durch Laserschweißen zu einer höheren Festigkeit und einer verbesserten Funktion bei gleichen Gewicht führt. Gegebenenfalls kann die Blechdicke reduziert werden, so daß Materialkosten eingespart werden. Bei der erfindungsgemäßen Kfz-Tür oder der Kfz-Klappe ist ein Haltewulst für eine Dichtung integriert, die paßgenau und funktionssicher eingebaut werden kann.

Im folgenden werden in der Zeichnung dargestellte Ausführungsbeispiele der Erfindung erläutert; Es zeigen:
Figur 1 den Randbereich einer Kfz-Tür oder der Kfz-Klappe im Schnitt,
Figur 2, 3 und 4 andere Ausführungsformen des Gegenstandes nach Figur 1 bei der Herstellung,
Figur 5 eine weitere Ausführung des Randbereichs einer Kfz-Tür oder der Kfz-Klappe im Schnitt,
Figuren 6, 7 und 8 andere Ausführungen des Gegenstandes nach Figur 5.

Zu der in Figur t wiedergegebenen Kfz-Tür oder der Kfz-Klappe gehören ein Außenblech 1 mit einem um ca. 90° aus der Blechebene abgewinkelten Randstreifen 2 und ein Innenblech 3 mit einem sich abschnittsweise parallel zum Randstreifen 2 erstreckenden Randstreifen 4. Die beiden Randstreifen 2 und 4 sind mit einer den Spalt zwischen diesen beiden Randstreifen 2 und 4 füllenden Laserschweißnaht 5 verbunden. Im übrigen sind das Außenblech 1 und das Innenblech 3 in einem sich neben den Randstreifen 3 bzw 4 erstreckenden Stützbereich 6 aufeinanderliegend abgestützt.

Der Randstreifen 4 des Innenblechs 3 ist länger als der Randstreifen 2 des Außenblechs 1. Der überstehende Abschnitt des Randstreifens 4 ist aus der Ebene des Verbindungsbereichs zurück- und bis in eine Richtung orthogonal zur Blechebene bzw. Türebene gebogen. Er bildet dadurch einen Haltewulst 7 für eine Dichtung 8. Die Dichtung 8 überfaßt und hinterfaßt mit einem Abschnitt 9 den Haltewulst 7 und liegt eng an der Außenseite des Randstreifens 2 an. Eine Dichtungslippe 10, deren Außenseite mit der Außenseite des Außenblechs 1 fluchtet, dichtet eine Fuge 11 zwischen Kfz-Tür oder der Kfz-Klappe und einem Rahmenteil 12 ab.

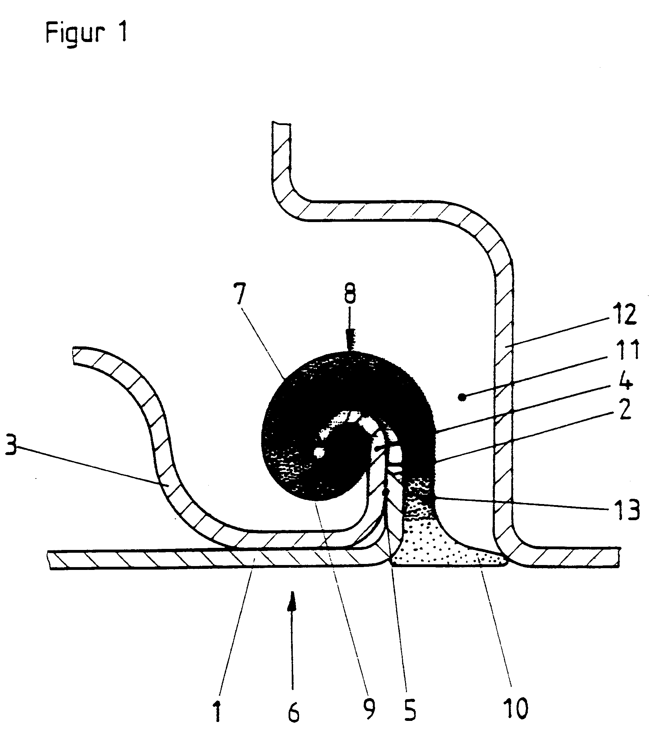

In Figur 1 ist noch angedeutet, daß die Dichtung abschnittsweise aus Materialien unterschiedlicher Härte besteht. Der Abschnitt 9 der Dichtung 8 weist eine höhere Härte auf, ein daran anschließender Abschnitt 13, der an der Außenseite des Randstreifens 2 anliegt, weist eine mittlere Härte auf und die Dichtlippe 10 weist eine geringere Härte auf.

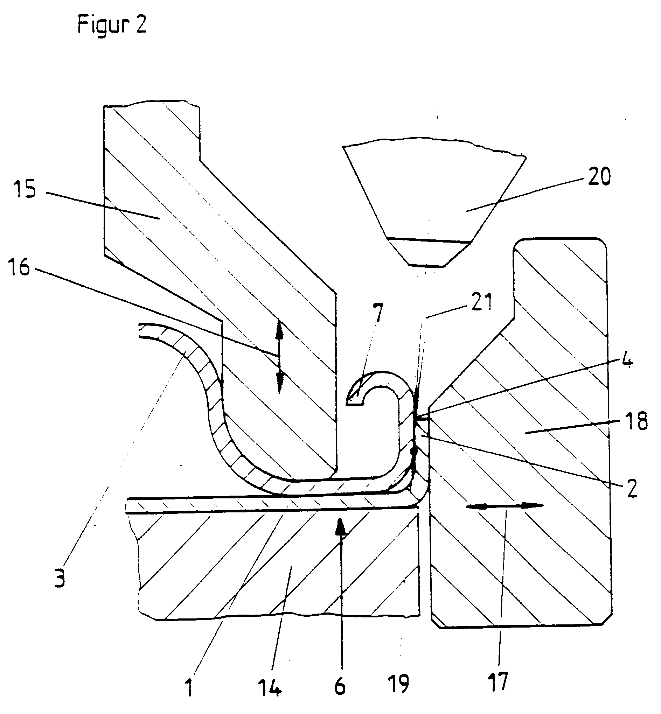

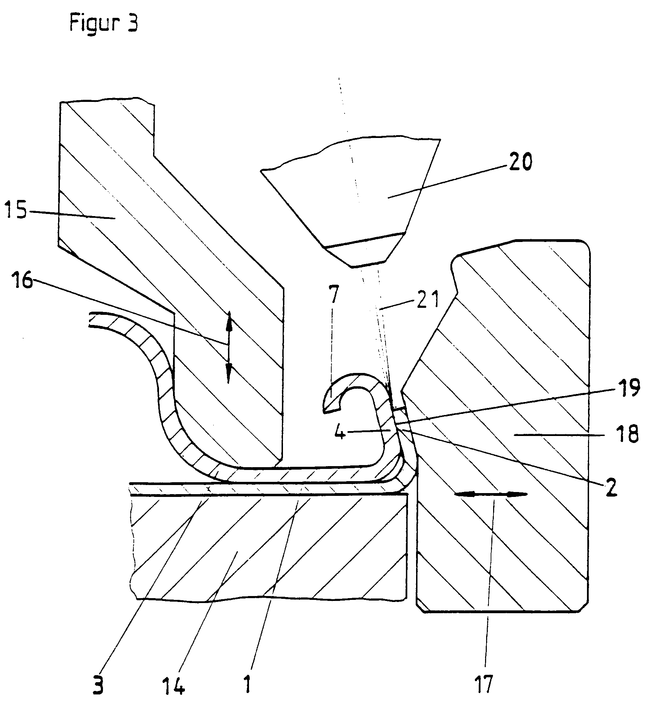

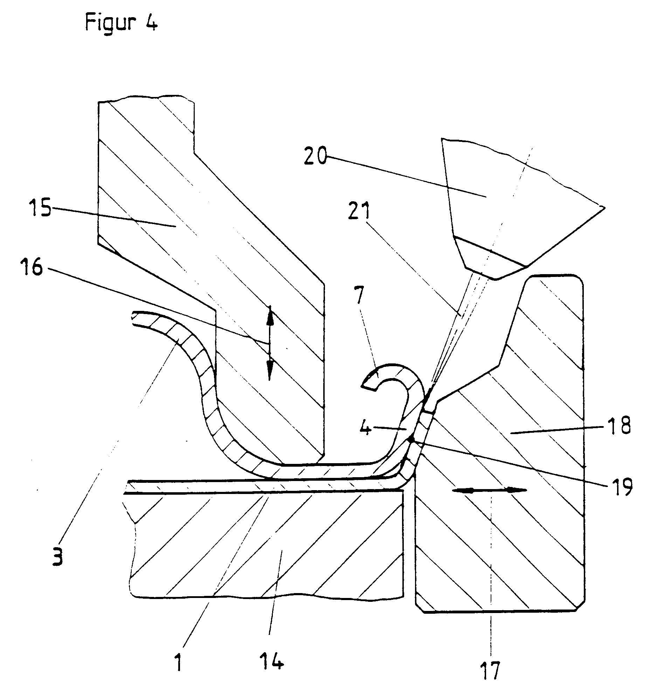

In den Figuren 2 bis 4 bezeichnen gleiche Bezugszeichen gleiche Teile. Bei der Ausführung nach Figur 2 sind die Randstreifen 2 bzw. 4 um ca. 90° aus der Blechebene bzw. Türebene abgebogen. Bei der Ausführung nach Figur 3 sind die Randstreifen 2 bzw. 4 um einen Winkel > 90° aus der Blechebene bzw. Türebene abgebogen. Bei der Ausführung nach Figur 4 sind die Randstreifen 2 bzw. 4 um einen Winkel < 90° aus der Blechebene bzw. Türebene abgebogen.

Im übrigen erläutern die Figuren 2 bis 4 ein Verfahren zur Herstellung einer Verbindung der Randbereiche 2 und 4 von Außenblech 1 und Innenblech 3, wobei vom Außenblech 1 und vom Innenblech 3 jeweils der Randstreifen 2 bzw. 4 abgebogen wird und dann die Bleche aufeinandergelegt sowie im Stützbereich 6 zwischen einer Auflage 14 und einem Niederhalter 15 eingespannt werden. Ein Doppelpfeil 16 macht deutlich, das der Niederhalter orthogonal zur Auflage 14 beweglich ist. Mit einem in Richtung des Doppelpfeils 17, also in der Blechebene verschiebbaren Klemmschieber 18 wird der Randstreifen 2 des Außenblechs 1 gegen den Randstreifen 4 des Innenblechs 3 gedrückt, wobei zu erwartende Auffederungen des Randstreifens 2 zurückgestellt und auf ein Sollmaß fixiert werden.

Bei der dargestellten Ausführung ist nunmehr ein Spalt 19 zwischen den Randstreifen 2 und 4 nach oben offen, so daß die beiden Randstreifen 2 und 4 mit Hilfe eines von einem Laserkopf 20 ausgehenden Laserstrahles 21 verschweißt werden können. Dabei ist der Laserstrahl 21 derart in den Spalt 19 zwischen den beiden Randstreifen 2 und 4 gerichtet, daß der Spalt 19 mit der Laserschweißnaht gefüllt wird.

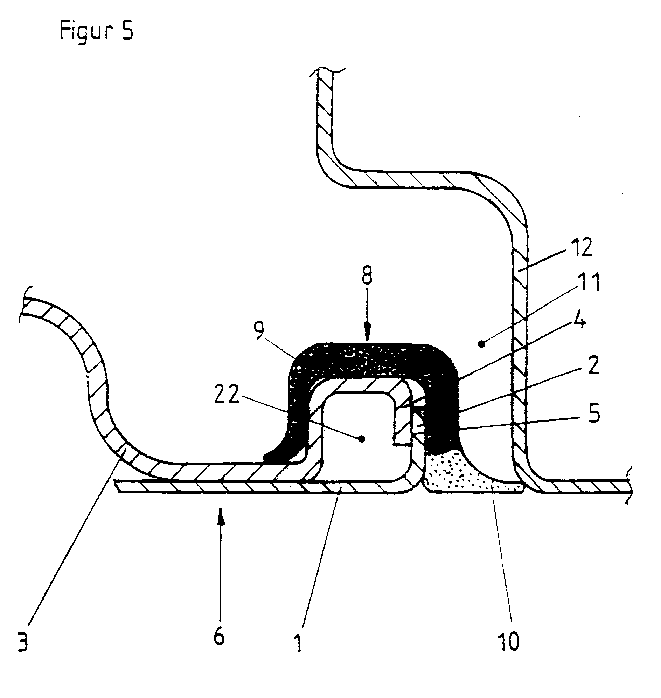

In den Figuren 5 bis 8 bezeichnen gleiche Bezugszeichen gleiche Teile. Bei der Ausführung nach Figur 5 ist der Randstreifen 4 des Innenblechs 3 U-profilförmig ausgebildet und bildet mit dem zugeordneten Abschnitt des Außenblechs 1 ein Hohlprofil 22. Die Anordnung ist derart, daß die Innenseiten der Randstreifen 2 und 4 von Außenblech 1 und Innenblech 3 miteinander durch die Laserschweißnaht verbunden sind. Die Dichtung 8 ist ebenfalls U-profilförmig ausgebildet und überfaßt türinnenseitig das Hohlprofil 22.

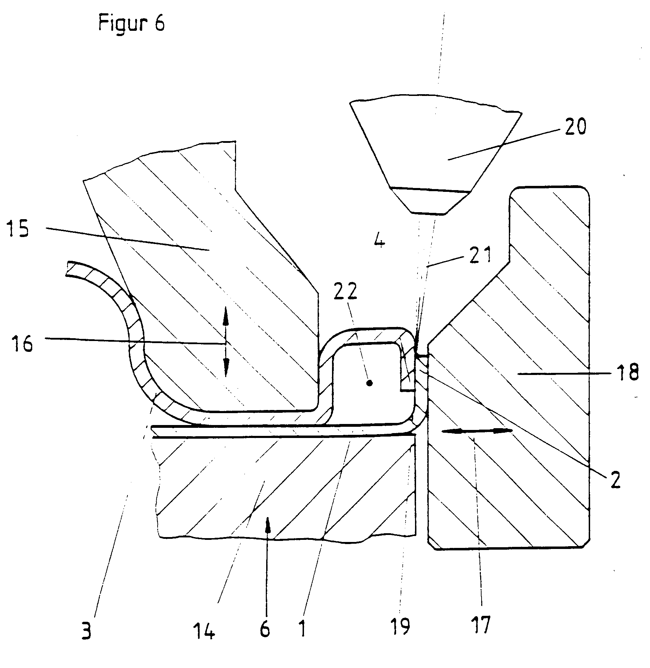

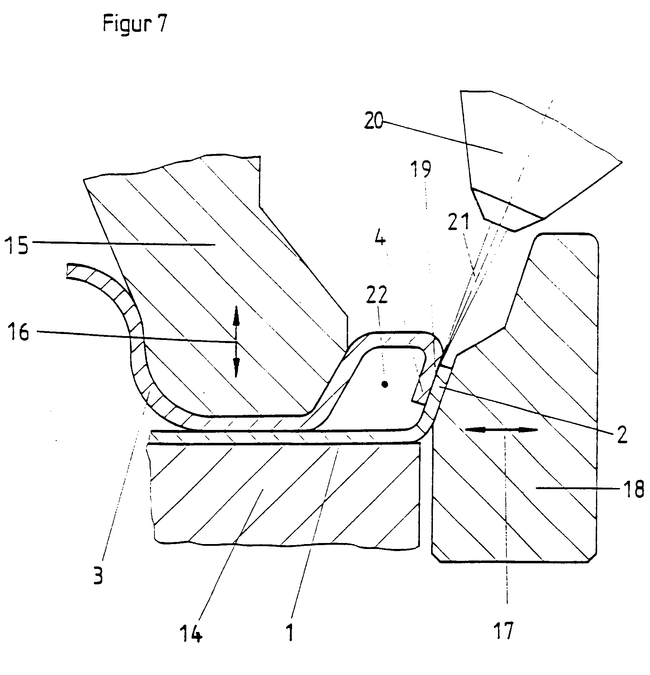

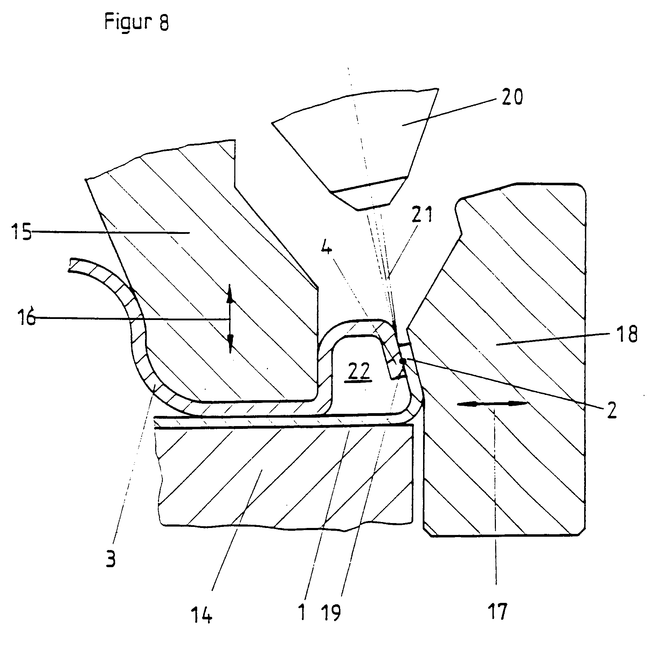

Bei der in Figur 6 dargestellten Ausführung erstrecken sich die Randstreifen 2 bzw. 4 unter einen Winkel von ca. 90° zur Blechebene bzw. Türebene. Bei der Ausführung nach Figur 7 erstrecken sich die Randstreifen 2 bzw. 4 unter einen Winkel < 90° zur Blechebene bzw. Türebene. Bei der Ausführung nach Figur 8 erstrecken sich die Randstreifen 2 bzw. 4 unter einem Winkel > 90° zur Blechebene bzw. Türebene. Im übrigen zeigen die Figuren 6 bis 8 die Herstellung der Verbindung zwischen den beiden Randstreifen 2 und 4. Die Herstellung erfolgt in der gleichen Weise, wie sie unter Bezugnahme auf die Figuren 2 bis 4 erläutert wurde.

### Bezugszeichenliste

- 1: Außenblech
- 2: Randstreifen von 1
- 3: Innenblech
- 4: Randstreifen von 3
- 5: Laserschweißnaht zwischen 2 und 4
- 6: Stützbereich zwischen 3 und 4
- 7: Haltewulst an 4
- 8: Dichtung
- 9: innerer Abschnitt an 8
- 10: Dichtungslippe an 8
- 11: Fuge zwischen Türrand und 12
- 12: Rahmenteil
- 13: Abschnitt mit mittlerer Härte von 8
- 14: Auflage
- 15: Niederhalter
- 16: Doppelpfeil
- 17: Doppelpfeil
- 18: Klemmschieber
- 19: Spalt zwischen 2 und 4
- 20: Laserkopf
- 21: Laserstrahl
- 22: Hohlprofil

## Patentansprüche

1. Kfz-Tür oder Kfz-Klappe mit einem Außenblech und einem Innenblech, die im Randbereich aneinander abgestützt und durch Laserschweißen miteinander verbunden sind, **dadurch gekennzeichnet,** dass ein Randstreifen (4) des Innenblechs (3) in Richtung Türinnenseite Wulste bildend abgebogen ist und mit einem ebenfalls in Richtung Türinnenseite abgebogenen Randstreifen (2) des Außenblechs (1) mittels einer den Spalt (19) zwischen den beiden Randstreifen (2, 4) füllenden Laserschweißnaht (5) verbunden ist.

2. Kfz-Tür nach Anspruch 1, **dadurch gekennzeichnet,** daß die Randstreifen (2, 4) unter einem Winkel kleiner oder gleich 90° zur Blechebene bzw. Türebene abgebogen sind.

3. Kfz-Tür nach Anspruch 1, **dadurch gekennzeichnet,** daß die Randstreifen unter einem Winkel > 90° zur Blechebene bzw. Türebene abgebogen sind.

4. Kfz-Tür nach einem der Ansprüche 1 bis 3, **dadurch gekennzeichnet**, daß der Randstreifen (4) des Innenblechs (3) einen vom Verbindungsbereich ausgehenden Haltewulst (7) für eine Dichtung (8) aufweist.

5. Kfz-Tür nach einem der Ansprüche 1 bis 4, **dadurch gekennzeichnet,** daß der Haltewulst (7) aus der Ebene des Verbindungsbereiches zurück- und bis in eine Richtung orthogonal zur Türebene gebogen ist.

6. Kfz-Tür nach einem der Ansprüche 1 bis 3, **dadurch gekennzeichnet,** daß der Randstreifen (4) des Innenblechs U-profilförmig ausgebildet ist und mit einem zugeordneten Abschnitt des Außenblechs (1) ein Hohlprofil (22) als Haltewulst für eine Dichtung (89 bildet.

7. Kfz-Tür nach Anspruch 6, **dadurch gekennzeichnet,** daß die Innenseiten der Randstreifen (2, 4) von Außenblech (1) und Innenblech (3) miteinander verbunden sind.

8. Verfahren zum Herstellen einer Kfz-Tür oder einer Kfz-Klappe nach einem der Ansprüche 1 bis 7, **dadurch gekennzeichnet,** daß vom Außenblech (3) und vom Innenblech (1) jeweils ein Randstreifen (2 bzw. 4) abgebogen wird, daß die Bleche aufeinandergelegt und im Stützbereich (6) zwischen einer Auflage (14) und einem Niederhalter (15) eingespannt werden, daß der Randstreifen (2) des Außenblechs (1) mit einem Klemmschieber (18) gegen den Randstreifen (4) des Innenblechs (3) gedrückt wird und daß die Randstreifen (2, 4) mit einem in den Spalt (19) zwischen den beiden Randstreifen (2, 4) gerichteten Laserstrahl (21) verschweißt werden.

## Claims

1. Motor vehicle door or hatch with an outer sheet and inner sheet which are mutually supported and secured together at the edge region, **characterized in that** an edge strip (4) of inner sheet (3) is bent off in the direction of the door inside, thus forming a bead, and is connected with an edge strip (2) of outer sheet (1), also bent off in the direction of the door inside, by means of a laser weld beam (5) filling the gap (1) between the two edge strips (2, 4).

2. Motor vehicle door pursuant to Claim 1, **characterized in that** the edge strips (2,4) are bent off at an angle being smaller than or equal to 90° versus the sheet metal plain and/or door plain.

3. Motor vehicle door pursuant to Claim 1, **characterized in that** the edge strips are bent off at an angle > 90° versus the sheet metal plain and/or door plain.

4. Motor vehicle door pursuant to any of Claims 1 to 3, **characterized in that** the edge strip (4) of the inner sheet (3) has got a holding bead (7) extending from the connection area to accommodate a sealing (8).

5. Motor vehicle door pursuant to any of Claims 1 to 4, **characterized in that** the holding bead (7) is bent from the plain of the connection area back and into one direction orthogonally versus the door plain.

6. Motor vehicle door pursuant to any of Claims 1 to 3, **characterized in that** the edge strip (4) of the inner sheet is of a U-channel type shape and forms a hollow profile (22) together with an allocated section of the outer sheet (1) to accommodate a sealing (89).

7. Motor vehicle door pursuant to Claim 6, **characterized in that** the insides of edge strips (2,4) of the outer sheet (1) and inner sheet (3) are connected to each other.

8. Method for establishment of a connection between the edge regions of the outer sheet and inner sheet of a motor vehicle door or hatch pursuant to any of Claims 1 to 7, **characterized in that** one edge strip (2 and/or 4) each is bent off from the outer sheet (3) and from the inner sheet (1), and that said sheets are laid one upon each other and are restrained in a support region (6) between a support (14) and a hold-down device (15), and that said edge strip (2) of the outer sheet (1) is pressed with a clamping slide (18) against edge strip (4) of the inner sheet (3), and that the edge strips (2,4) are welded together with a laser beam (21) directed into the gap (19) between the two edge strips (2,4).

## Revendications

1. Portière ou hayon de véhicule avec une tôle extérieure et une tôle intérieure dont les extrémités sont jointives et reliées l'une à l'autre au moyen d'une soudure par laser **caractérisée en ce qu**'une bande latérale (4) de la tôle intérieure (3) est repliée dans le sens intérieur de la portière, formant ainsi un talon, et est reliée à une bande latérale (2) de la tôle extérieure (1) également repliée dans le sens intérieur de la portière au moyen d'une soudure par faisceau laser (5) qui remplit l'interstice (19) entre les deux bandes latérales (2, 4).

2. Portière de véhicule selon la revendication 1 **caractérisée en ce que** les bandes latérales (2,4) sont repliées avec un angle inférieur ou égal à 90° par rapport au plan de la tôle ou au plan de la portière.

3. Portière de véhicule selon la revendication 1 **caractérisée en ce que** les bandes latérales sont repliées avec un angle supérieur à 90 ° par rapport au plan de la tôle ou au plan de la portière.

4. Portière de véhicule selon une des revendications 1 à 3 **caracté**risée en ce que la bande latérale (4) de la tôle intérieure (3) présente un talon (7) pour une glamiture d'étanchéité (8) partant de la zone de liaison.

5. Portière de véhicule selon une des revendications 1 à 4 **caractérisée en ce que** le talon (7) est replié à partir du plan de la zone d'assemblage et jusque dans un sens orthogonal par rapport au plan de la portière.

6. Portière de véhicule selon une des revendications 1 à 3 **caractérisée en ce que** la bande latérale de la tôle intérieure a la forme d'un profil en U et forme avec un segment correspondant de la tôle extérieure (1) un profil en creux (22) constituant un talon pour une garniture d'étanchéité (8).

7. Portière de véhicule selon la revendication 6 **caractérisée en ce que** les faces intérieures des bandes latérales (2, 4) de la tôle extérieure (1) et de la tôle intérieure (3) sont reliées l'une à l'autre.

8. Procédé pour la fabrication d'une portière ou d'un hayon de porte selon l'une des revendications 1 à 7 caractérisé en ce qu'une bande latérale (2 et 4) respectivement de la tôle extérieure (3) et de la tôle intérieure (1) sont repliées, que les tôles sont posées l'une sur l'autre et serrées dans la zone de soutien (6) entre un appui (14) et un presse-tôles (15), que la bande latérale (2) de la tôle extérieure (1) est pressée contre la bande latérale (4) de la tôle intérieure (3) au moyen d'un poussoir à serrage (18) et que les bandes latérales (2, 4) sont soudées au moyen d'un faisceau laser (21) dirigé dans l'interstice (19) entre les deux bandes latérales (2, 4).
